# EUROPÄISCHE PATENTSCHRIFT

(11) **EP 3 609 735 B1**
(45) Veröffentlichungstag und Bekanntmachung des Hinweises auf die Patenterteilung: **18.05.2022**
(21) Anmeldenummer: 18717622.7
(22) Anmeldetag: 13.04.2018
(51) Int. Cl.: B60N 2/42, B60N 2/24, B60N 2/16, F41H 7/04, F16F 1/02, F16F 15/04

(54) **STOSSABSORBIERENDER SITZ MIT BODEN- ODER DECKENMONTIERTEN DÄMPFUNGSGLIEDERN**
SHOCK-ABSORBING SEAT COMPRISING FLOOR- OR CEILING-MOUNTED DAMPING MEMBERS
SIÈGE ABSORBANT DES CHOCS COMPRENANT DES ORGANES D'AMORTISSEMENT MONTÉS AU SOL OU AU PLAFOND

(30) Priorität: 13.04.2017 DE 102017108073
(43) Veröffentlichungstag der Anmeldung: 19.02.2020
(73) Patentinhaber: Rheinmetall Protection Systems GmbH, 53227 Bonn (DE)
(72) Erfinder: BUDER, Francois, 53859 Niederkassel/Rheidt (DE); INDEN, Michael, 50169 Kerpen (DE); NEULING, Rene, 53773 Hennef (DE)
(74) Vertreter: Greif, Thomas
(86) Internationale Anmeldenummer: PCT/EP2018/059603
(87) Internationale Veröffentlichungsnummer: WO 2018/189399

(56) Entgegenhaltungen:
- EP-A1- 0 566 436
- EP-A1- 2 650 168
- EP-A2- 2 925 560
- WO-A1-2016/126200
- GB-A- 2 481 202
- US-B1- 9 221 361

## Beschreibung

Die Erfindung betrifft ein stoßabsorbierendes Dämpfungsglied sowie einen Sitz für ein Landfahrzeug, der mit zumindest einem erfindungsgemäßen Dämpfungsglied ausgerüstet ist.

Es sind Sitze für Landfahrzeuge, insbesondere für militärische Einsatzzwecke, bekannt, die Dämpfungsglieder aufweisen, um von außen auf das Fahrzeug einwirkende Stöße zu absorbieren und damit den Insassen, die auf diesen Sitzen sitzen, Schutz bieten. Stöße, die von außen auf das Fahrzeug einwirken, sind im Regelfall Stoßwirkungen von explosiven Materialien, wie sie zum Beispiel in Minen, über die das Fahrzeug fährt, Verwendung finden.

Aus der DE 10 2008 053 152 A1 ist ein Deformationselement zum Schutz einer Einrichtung, insbesondere einer Fußauflagenplatte in einem insbesondere militärischen Fahrzeug bekannt, wobei das Deformationselement im Wesentlichen U-förmig gestaltet ist.

Die EP 0 566 436 A1 offenbart dazu ein Dämpfungsglied für eine Ladung, welches ein Federelement aufweist. Das Federelement beinhaltet eine gebogene Form und eine Ausnehmung. Über zwei Angriffspunkte wird das Dämpfungsglied mit einem Träger verbunden.

Der Erfindung liegt die Aufgabe zu Grunde, ein Dämpfungsglied bereitzustellen, welches eine Stoßdämpfung ermöglicht, bei einfachem Herstellungsaufwand. Ebenso ist Aufgabe der Erfindung, einen Sitz für ein Fahrzeug bereitzustellen, mit dem die Person vor äußeren Stoßwirkungen geschützt ist.

Erfindungsgemäß wird ein Dämpfungsglied vorgeschlagen, welches mindestens zwei Angriffspunkte besitzt, um impulsartig auftretende Kräfte in das Dämpfungsglied einzuleiten.

Das Dämpfungsglied besteht erfindungsgemäß aus mindestens einem Federelement.

Weiterhin besitzt das Dämpfungsglied Befestigungselemente, über welchen das Dämpfungsglied befestigt werden kann. Bevorzugter Weise sind die Befestigungselemente an den Angriffspunkten angeordnet, so dass die Krafteinwirkung auf das Dämpfungsglied durch die Befestigungselemente geschehen kann.

Das erfindungsgemäße Dämpfungsglied weist weiterhin ein Absorptionsmittel auf, welches in der Lage ist, eingeleitete Kräfte aufzunehmen und dadurch die impulsartig auftretenden Krafteinwirkungen dämpfen kann.

Ein solches Absorptionsmittel kann ein komprimierbarer Stoff sein oder ein elastischer Stoff, welcher nach Krafteinwirkung wieder in seine Ausgangslage zurückkehrt.

Das Absorptionsmittel kann dazu in den Federelementen integriert sein oder das Absorptionsmittel stellt das Material der Federelemente dar. Erfindungsgemäß sind mehrere Federelemente für ein Dämpfungsglied vorgesehen.

Die Federelemente sind so gestaltet, dass sie eine Krafteinwirkung aufnehmen können, um impulsartig auftretende Kräfte zu dämpfen. Dazu sind die Federelemente gebogen gestaltet. Diese Bogenform hat zum einen den Vorteil, dass die Federelemente stabiler sind als bei geraden Formen, da gebogene Formen größeren Kräften standhalten können, als gerade

Formen. Zum anderen wird bei einer gebogenen Form aber eine Ausnehmung vorgesehen, durch welche bei Krafteinwirkung die Federelemente verformt werden können.

Die Federelemente sind durch die Absorptionsmittel und Ihrer Formgebung zunächst elastisch gestaltet. Das bedeutet, dass Sie einer gewissen Krafteinwirkung ohne Verformung standhalten. Wenn diese Krafteinwirkung jedoch zu groß wird, können die Seiten oder Enden der Federelemente an den Ausnehmungen sich durch Verformung zueinander bewegen und so weitere Kräfte aufnehmen und Dämpfen.

In einer besonderen Ausführungsform hat sich deshalb eine C-Form für die Federelemente bewährt.

Die Dämpfungsglieder sind so ausgeführt, dass Sie in einem Fahrzeug eingesetzt werden können, um einen Fahrzeugsitz gegen Stoßkräfte, die auf den Sitz einwirken, abzudämpfen. Dazu wird vorgeschlagen, mindestens ein erfindungsgemäßes Dämpfungsglied am Sitz des Fahrzeugs anzuordnen.

Der Sitz kann dadurch gedämpft werden, dass mindestens ein Dämpfungsglied zwischen Sitz und Fahrzeugchassis angeordnet ist. Ebenso kann der Sitz auch hängend an der Decke des Fahrgastraumes angeordnet sein. In diesem Fall wird mindestens ein Dämpfungsglied zwischen Aufhängung und Decke vorgesehen.

Um die Dämpfungseigenschaft auf einen speziellen Sitz oder Einsatz einzustellen, wird vorgeschlagen, mehrere Federelemente in einem Dämpfungselement zu verwenden.

Dazu können mehrere Federelemente parallel zueinander angeordnet werden. Durch die Anordnung mehrerer Federelemente erhöht sich sie aufzunehmende Kraft des Dämpfungslieds.

Auch eine Anordnung mehrerer Federelemente nebeneinander ist denkbar. Es empfiehlt sich die Kombination mehrerer Federelemente parallel zueinander und nebeneinander. Dazu könnten beispielsweise mehrere Reihen Federelemente an einem Dämpfungsglied eingesetzt werden.

Erfindungsgemäß ist vorgesehen, dass mehrere Federelemente übereinander eingesetzt werden. Dadurch erhöht sich der Weg der Verformung und es kann eine höhere Elastizität erreicht werden.

Durch die Kombination der oben genannten Anordnungsmöglichkeiten der Federelemente in einem Dämpfungsglied können die Dämpfungseigenschaften, wie Elastizität und Verformungsweg, auf einen spezifischen Einsatzzweck eingestellt werden.

Ein Vorteil der vorliegenden Erfindung ist es, dass der Sitz höhenverstellbar angeordnet sein kann. Die erfindungsgemäßen Dämpfungsglieder behindern diese Höhenverstellung nicht.

Zur Höhenverstellung beinhaltet der Sitz eine Säule, an welcher er angelengt ist. Der Sitz kann dann durch geeignete Mittel an der Säule höhenverstellt werden. Die Dämpfungsglieder sind dann an der Befestigung der Säule, entweder am Chassis des Fahrzeugs oder an der Decke des Fahrgastraumes vorgesehen.

In beiden Fällen wird das erfindungsgemäße Dämpfungsglied zwischen der Befestigung des Sitzes und des Chassis oder der Decke angeordnet. Mittels der Befestigungselemente kann das Dämpfungsglied zwischen Sitz und Chassis/Decke angebracht werden.

Für das Befestigungselement des Dämpfungsglieds kann das Federelement auch als ein Befestigungselement ausgebildet sein. An diesem kann der Sitz angeordnet sein, insbesondere höhenverstellbar angeordnet, wobei das Befestigungselement über mehrere Federelemente verfügen kann, die jeweils C-förmig ausgebildet sein können und mit dem Chassis oder der Decke des Fahrzeuges verbunden sind.

Bei der Verwendung von C-Förmigen Federelementen können sich in Folge einer Stoßeinwirkung von außen auf das Fahrzeug die mehreren C-förmigen Federelemente verformen und bauen somit die auf den Sitz wirkende Stoßenergie deutlich ab, sodass dadurch die auf dem Sitz sitzende Person vor dieser äußeren Stoßeinwirkung wirksam geschützt ist.

Werden mehrere, hintereinander angeordnete C-förmigen Federelemente verwendet, sind diese mit ihrem einen Scheitelpunkt als Befestigungselement, an dem der Sitz angeordnet ist ausgebildet. Mit ihrem anderen Scheitelpunkt sind die Federelemente an dem Chassis des Fahrzeuges, beziehungsweise an entsprechenden Trägerelementen befestigt. Besonders bevorzugt sind nicht nur mehrere C-förmige Federelemente hintereinander in einer Reihe angeordnet, sondern es sind zwei oder sogar mehr als zwei Reihen solcher Federelemente parallel zueinander angeordnet, wodurch die stoßabsorbierende Wirkung des gesamten Dämpfungsgliedes eingestellt werden kann.

Weitere Merkmale der vorliegenden Erfindung zeigen die Figuren:
- Fig. I:: Ein Sitzmit Dämpfungselementen und Säule zur Höhenverstellung des Sitzes
- Fig. I.1:: Sitz in Vorderansicht
- Fig. I.2:: Sitz in Seitenansicht
- Fig. I.3:: Sitz in perspektivischer Darstellung
- Fig. I.4:: Sitz in Draufsicht
- Fig. I.5:: Dämpfungselement an Säule

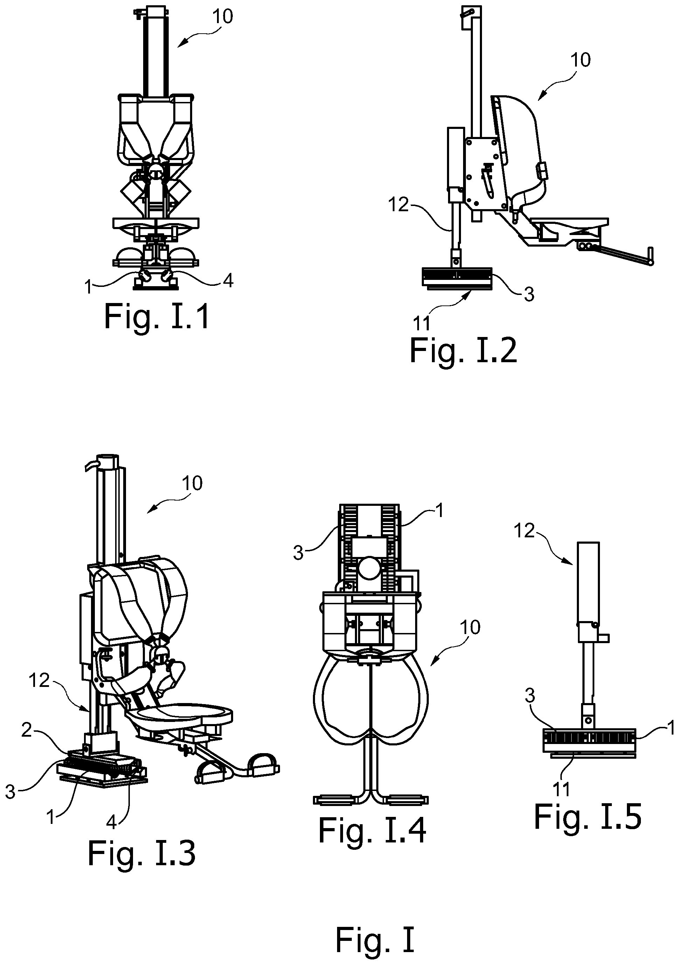

In der Figur I ist eine Ausführungsform eines Dämpfungsgliedes 1 dargestellt, bei dem der Sitz 10 über dieses Dämpfungsglied 1 mit dem Chassis 11 des nicht dargestellten Fahrzeuges verbunden ist.

Es ist erkennbar, dass der Sitz 10 beispielsweise höhenverstellbar an einer Säule 12 angeordnet ist, wobei die Säule 12 einen Bestandteil des Dämpfungsgliedes 1 bilden kann oder die Säule 12 an einem Teil des Dämpfungsgliedes 1 angeordnet ist

In Richtung einiger Befestigungselemente, also zum Beispiel in Richtung des Bodens des Fahrzeuges, befinden sich mehrere Federelemente 3 in gebogener Form 4, beispielsweise C-förmige Federelemente 3 zumindest in einer Reihe, hier in zwei Reihen parallel zueinander. Die Federelemente 3 zusammen bilden dabei das Dämpfungsglied 1.

Bei der normalen Belastung des Sitzes 10 kommt es nicht oder nicht zu einer nennenswerten Verformung der C-förmigen Federelemente 3. Erst bei einer Stoßwirkung von außen auf das Fahrzeug können diese sich verformen und damit die Stoßenergie absorbieren. Dies erfolgt dadurch, dass sich die C-förmigen Federelemente 3 verformen und dabei die freien Enden des großen C sich annähern können. Die Stoßenergie wird dabei durch Angriffspunkte 2 in die Dämpfungsglieder eingeleitet.

Die vorliegende Erfindung ist nicht auf die oben genannten Merkmale beschränkt. Vielmehr sind weitere Ausgestaltungen möglich, solange der resultierende Gegenstand zum Schutzumfang gehört, der durch die Ansprüche definiert ist. So können die Federelemente nicht nur an der Aufhängung bzw. an der Säule des Sitzes angeordnet sein, sondern auch in der Säule selbst. Der höhenverstellbare Sitz wird dadurch speziell gedämpft. Durch die Kombination von Dämpfungsgliedern in der Säule und der Aufhängung des Sitzes kann so ein individueller Dämpfungsgrad eingestellt werden.

### BEZUGSZEICHENLISTE

- 1: Dämpfungsglied
- 2: Angriffspunkt
- 3: Federelement
- 4: Gebogene Form

- 10: Sitz
- 11: Chassis
- 12: Säule

## Patentansprüche

1. Dämpfungsglied (1), welches mindestens zwei Angriffspunkte (2) aufweist,
wobei das Dämpfungsglied (1) mindestens ein Federelement (3) umfasst,
wobei das mindestens eine Federelement (3) ein Absorptionsmittel aufweist,
wobei das mindestens eine Federelement (3) eine gebogene Form (4) aufweist,
und wobei die gebogene Form (4) des mindestens einen Federelements (3) eine Ausnehmung aufweist, welche eine Verformung des mindestens einen Federelements (3) ermöglicht,
**dadurch gekennzeichnet,**
**dass** mehrere Federelemente (3) übereinander angeordnet sind.

2. Dämpfungsglied (1) nach Anspruch 1, **dadurch gekennzeichnet, dass** das Absorptionsmittel innerhalb des mindestens einen Federelements (3) angeordnet ist.

3. Dämpfungsglied (1) nach Anspruch 1, **dadurch gekennzeichnet, dass** das Absorptionsmittel als Werkstoff des mindestens einen Federelements (3) ausgeführt ist.

4. Dämpfungsglied (1) nach einem der Ansprüche 1 bis 3, **dadurch gekennzeichnet, dass** mindestens ein Federelement (3) C-förmig gestaltet ist.

5. Dämpfungsglied (1) nach einem der Ansprüche 1 bis 4, **dadurch gekennzeichnet, dass** Befestigungselemente an den Angriffspunkten (2) angeordnet sind.

6. Dämpfungsglied (1) nach einem der Ansprüche 1 bis 5, **dadurch gekennzeichnet, dass** das Dämpfungsglied mindestens zwei Federlemente (3) umfasst und Befestigungselemente an jedem Federelement (3) angeordnet sind.

7. Dämpfungsglied (1) nach einem der Ansprüche 1 bis 6, **dadurch gekennzeichnet, dass** das Absorptionsmittel aus einem elastisch verformbaren Material besteht.

8. Dämpfungsglied (1) nach einem der Ansprüche 1 bis 7, **dadurch gekennzeichnet, dass** mehrere Federelemente (3) parallel zueinander angeordnet sind.

9. Dämpfungsglied (1) nach einem der Ansprüche 1 bis 8, **dadurch gekennzeichnet, dass** mehrere Federelemente (3) neben einander angeordnet sind.

10. Sitz (10) für ein Landfahrzeug, **dadurch gekennzeichnet, dass** der Sitz (10) mindestens ein Dämpfungsglied (1) nach einem der Ansprüche 1 bis 9 umfasst.

11. Sitz (10) nach Anspruch 10, **dadurch gekennzeichnet, dass** das Dämpfungsglied (1) zwischen Sitz (10) und einem Chassis (11) des Landfahrzeugs angeordnet werden kann.

12. Sitz (10) nach Anspruch 10, **dadurch gekennzeichnet, dass** das Dämpfungsglied (1) zwischen Sitz (10) und der Decke des Landfahrzeugs angeordnet werden kann.

13. Sitz (10) nach einem der Ansprüche 10 bis 12, **dadurch gekennzeichnet, dass** der Sitz (10) eine Säule (12) umfasst, mittels welcher eine Höhenverstellung des Sitzes (10) stattfinden kann.

## Claims

1. Damping member (1) which has at least two engagement points (2),
wherein the damping member (1) comprises at least one spring element (3),
wherein the at least one spring element (3) has an absorption means,
wherein the at least one spring element (3) has a curved shape (4),
and wherein the curved shape (4) of the at least one spring element (3) has a recess which allows deformation of the at least one spring element (3),
**characterized**
**in that** a plurality of spring elements (3) are arranged one above the other.

2. Damping member (1) according to Claim 1, **characterized in that** the absorption means is arranged within the at least one spring element (3).

3. Damping member (1) according to Claim 1, **characterized in that** the absorption means is implemented as material of the at least one spring element (3).

4. Damping member (1) according to one of Claims 1 to 3, **characterized in that** at least one spring element (3) has a C-shaped configuration.

5. Damping member (1) according to one of Claims 1 to 4, **characterized in that** fastening elements are arranged at the engagement points (2).

6. Damping member (1) according to one of Claims 1 to 5, **characterized in that** the damping member comprises at least two spring elements (3) and fastening elements are arranged on each spring element (3).

7. Damping member (1) according to one of Claims 1 to 6, **characterized in that** the absorption means consists of an elastically deformable material.

8. Damping member (1) according to one of Claims 1 to 7, **characterized in that** a plurality of spring elements (3) are arranged parallel in relation to one another.

9. Damping member (1) according to one of Claims 1 to 8, **characterized in that** a plurality of spring elements (3) are arranged next to one another.

10. Seat (10) for a land vehicle, **characterized in that** the seat (10) comprises at least one damping member (1) according to one of Claims 1 to 9.

11. Seat (10) according to Claim 10, **characterized in that** the damping member (1) can be arranged between the seat (10) and a chassis (11) of the land vehicle.

12. Seat (10) according to Claim 10, **characterized in that** the damping member (1) can be arranged between the seat (10) and the ceiling of the land vehicle.

13. Seat (10) according to one of Claims 10 to 12, **characterized in that** the seat (10) comprises a pillar (12) by means of which the seat (10) can be vertically adjusted.

## Revendications

1. Organe d'amortissement (1), qui présente au moins deux points d'attaque (2),
l'organe d'amortissement (1) comprenant au moins un élément ressort (3),
l'au moins un élément ressort (3) présentant un moyen d'absorption,
l'au moins un élément ressort (3) présentant une forme courbée (4),
et la forme courbée (4) de l'au moins un élément ressort (3) présentant un évidement, qui permet une déformation de l'au moins un élément ressort (3),
**caractérisé en ce que**
plusieurs éléments ressorts (3) sont agencés les uns au-dessus des autres.

2. Organe d'amortissement (1) selon la revendication 1, **caractérisé en ce que** le moyen d'absorption est agencé à l'intérieur de l'au moins un élément ressort (3) .

3. Organe d'amortissement (1) selon la revendication 1, **caractérisé en ce que** le moyen d'absorption est réalisé en tant que matériau de l'au moins un élément ressort (3).

4. Organe d'amortissement (1) selon l'une quelconque des revendications 1 à 3, **caractérisé en ce qu'**au moins un élément ressort (3) est configuré en forme de C.

5. Organe d'amortissement (1) selon l'une quelconque des revendications 1 à 4, **caractérisé en ce que** des éléments de fixation sont agencés sur les points d'attaque (2).

6. Organe d'amortissement (1) selon l'une quelconque des revendications 1 à 5, **caractérisé en ce que** l'organe d'amortissement comprend au moins deux éléments ressorts (3) et des éléments de fixation sont agencés sur chaque élément ressort (3).

7. Organe d'amortissement (1) selon l'une quelconque des revendications 1 à 6, **caractérisé en ce que** le moyen d'absorption est constitué d'un matériau déformable élastiquement.

8. Organe d'amortissement (1) selon l'une quelconque des revendications 1 à 7, **caractérisé en ce que** plusieurs éléments ressorts (3) sont agencés parallèlement les uns aux autres.

9. Organe d'amortissement (1) selon l'une quelconque des revendications 1 à 8, **caractérisé en ce que** plusieurs éléments ressorts (3) sont agencés côte à côte.

10. Siège (10) pour un véhicule terrestre, **caractérisé en ce que** le siège (10) comprend au moins un organe d'amortissement (1) selon l'une quelconque des revendications 1 à 9.

11. Siège (10) selon la revendication 10, **caractérisé en ce que** l'organe d'amortissement (1) peut être agencé entre le siège (10) et un châssis (11) du véhicule terrestre.

12. Siège (10) selon la revendication 10, **caractérisé en ce que** l'organe d'amortissement (1) peut être agencé entre le siège (10) et le plafond du véhicule terrestre.

13. Siège (10) selon l'une quelconque des revendications 10 à 12, **caractérisé en ce que** le siège (10) comprend un montant (12) au moyen duquel un réglage en hauteur du siège (10) peut avoir lieu.
